# NEUE EUROPÄISCHE PATENTSCHRIFT

(11) **EP 1 163 388 B2**
(45) Veröffentlichungstag und Bekanntmachung des Hinweises auf die Entscheidung über den Einspruch: **05.08.2009**
(45) Hinweis auf die Patenterteilung: 13.10.2004
(21) Anmeldenummer: 00912592.3
(22) Anmeldetag: 10.03.2000
(51) Int. Cl.: D06F 37/30, D06F 37/20

(54) **VON VORN BESCHICKBARE WASCHMASCHINE**
FRONT-LOADING WASHING MACHINE
MACHINE A LAVER A CHARGEMENT FRONTAL

(30) Priorität: 12.03.1999 DE 19911139
(43) Veröffentlichungstag der Anmeldung: 19.12.2001
(73) Patentinhaber: BSH Bosch und Siemens Hausgeräte GmbH, 81739 München (DE)
(72) Erfinder: SKRIPPEK, Jörg, D-14641 Priort (DE); HEYDER, Reinhard, D-13403 Berlin (DE)
(86) Internationale Anmeldenummer: PCT/EP2000/002133
(87) Internationale Veröffentlichungsnummer: WO 2000/055414

(56) Entgegenhaltungen:
- EP-A- 0 354 158
- EP-A- 0 413 915
- DE-A- 19 547 745
- DE-C- 31 322 111
- DE-U- 1 933 117
- GB-A- 2 104 110
- LU-A- 37 211
- US-A- 2 296 260
- US-A- 2 687 861
- US-A- 2 895 320
- US-A- 3 111 017
- US-A- 5 862 686

## Beschreibung

Die Erfindung bezieht sich auf eine von vom beschickbare Waschmaschine mit einer innerhalb einer mit der Rückwand des Laugenbehälters in fester Verbindung stehenden Lagerhülse über eine Welle fliegend gelagerten Wäschetrommel, die durch einen hinter der Rückwand des Laugenbehälters angeordneten Motor angetrieben ist.

Aus der DE 195 47 745 A1 ist eine derartige Antriebsvorrichtung bereits bekannt. In dieser Antriebsvorrichtung ist die horizontal liegende Welle der Wäschetrommel an ihrem äußeren Ende mit dem Läufer des Motors drehfest verbunden. Der Motor treibt somit direkt auf die Welle der Wäschetrommel. Dadurch, daß der Motor die Wäschetrommel direkt antreibt, muß er ein verhältnismäßig hohes Drehmoment aufbringen, um diese in Bewegung zu setzen.

Aus der DE 39 27 426 A1 ist ein Gleichstrom-Außenläufermotor für den Direktantrieb einer Wäschetrommel in einer Wäschebehandtungsmaschine bekannt, dessen Rotor über ein Getriebe, beispielsweise nach Art eines Planetengetriebes, die Antriebswelle der Wäschetrommel antreibt. Dadurch, daß das Getriebe zwischen dem Motor und der Rückwand der Waschmaschine angebracht ist, wird zusätzlicher Platz benötigt, der dann für die Wäschetrommel nicht zur Verfügung steht.

Aus der LU 37 211 ist ein elektrischer Antriebsmotor bekannt, der über Tragarm an einem schwingenden Gehäuse befestigt ist und über Transmissionsriemen auf eine Riemenscheibe eines Laugenbehälters antreibt. Die GB 2 104 110 A zeigt einen außerhalb der Peripherie eines Laugenbehälters befestigten Antriebsmotor. Auch aus der US 2 687 861 und aus der EP 0 354 158 A2 sind Antriebsmotoren zum Antrieb von in Laugenbehältern gelagerten Wäschetrommeln bekannt, die hinter der Rückwand des Laugenbehälters angeordnet sind, jedoch nicht mit der Rückwand des Laugenbehälters verbunden sind.

Es ist die Aufgabe der Erfindung, eine von vorn beschickbare Waschmaschine derart zu verbessern, dass der Motor platzsparend angeordnet ist.

Diese Aufgabe wird erfindungsgemäß durch die Merkmale von Anspruch 1 gelöst.

Ein besonderer Vorteil der Erfindung besteht darin, daß die Wäschetrommel durch einen Motor angetrieben wird, der ein gegenüber einem Direktantrieb niedrigeres Drehmoment aufweist. Die Reduktion des Drehmoments wird durch ein Getriebe erreicht, das jedoch im Unterschied zu einem konzentrisch zur Antriebswelle angeordneten Motor und einem zugehörigen ebenfalls konzentrisch angeordneten Getriebe, wie aus der DE 39 27 426 A1 bekannt ist, zu einer Verringerung des Bauraums für den Antrieb führt.

Besonders vorteilhaft beim erfindungsgemäßen Antrieb ist der geringere Materialaufwand für den Motor im Gegensatz zu Direktantriebsmotoren. Beim erfindungsgemäßen Antrieb können außerdem die Toleranzen im Luftspalt besser als beim Direktantrieb beherrscht werden, womit der Wirkungsgrad und das Motorgeräusch günstig beeinflußbar sind..

Ein weiterer Vorteil der Erfindung besteht darin, daß der Motor auf dem Tragteil angeordnet ist. Dieses ist durch von der durch die Trommelwelle gebildeten Mitte nach außen sich erstreckende Arme ausgebildet, wobei auf einem der Arme der Motor angeordnet wird. Der den Motor tragende Arm ist kreisförmig in der zur Rückwand des Laugenbehälters koplanaren Ebene aufgeweitet, so daß sich bei Draufsicht auf die Rückwand des Laugenbehälters sowie des Tragsterns der Motor ganz im Bereich eines Tragarms des Tragteils erstreckt. Das Tragteil weist vorzugsweise ein U-förmig von der Rückwand des Laugenbehälters wegweisendes Profil auf, durch das es eine höhere Steifigkeit erhält. Vorzugsweise umschließt dieses U-förmige Profil auch die kreisförmige Ausbuchtung in dem den Motor aufnehmenden Tragarm. In einem anderen Ausführungsbeispiel ist das U-förmige Profil für die Aufnahme des Motors der Rückwand des Laugenbehälters zugewandt.

In besonders vorteilhafter Weise kommt der erfindungsgemäße Motor zum Einsatz, wenn die Wäschetrommel und der sie aufnehmende Laugenbehälter mit einer leichten Neigung, beispielsweise von ca. 10° oder 15°, gegenüber der Horizontalen in der Waschmaschine angeordnet sind, wobei die mit der Befüllungsöffnung ausgestattete Vorderseite des Laugenbehälters höher liegt als die Rückwand. In diesem Fall wird der Motor unterhalb der Trommelwelle angeordnet, so daß sich die obere Kante der Rückwand des Laugenbehälters in der Nähe der Rückwand des Waschmaschinengehäuses befindet und unterhalb der in der Mitte der Rückwand des Laugenbehälters befindlichen Welle der Wäschetrommel genügend Platz zwischen der Rückwand des Laugenbehälters und der Rückwand des Gehäuses ist, um den Motor aufzunehmen.

Die Statorpakete und die Magnetpole des Rotors sind entweder axial oder radial zueinander angeordnet. Das Drehmoment des Motors wird über ein Getriebe auf die Trommelwelle übertragen. Als Getriebe kommt entweder ein Zahnriemen oder ein Keilriemen in Verbindung mit entsprechenden Riemenscheiben in Betracht oder ein Zahnradgetnebe. insbesondere mit schräg verzahnten Zahnrädern. Auch eine Kette läßt sich einsetzen, um die Bewegung von einem auf der Motorwelle angebrachten Ritzel auf ein auf der Trommelwelle angebrachtes Kettenrad zu übertragen

Vorteilhafte Weiterbildungen ergeben sich aus den Unteransprüchen.

Nachstehend wird die Erfindung anhand der Zeichnungen in Ausführungsbeispielen näher erläutert. Es zeigen:
- Fig. 1: eine Draufsicht auf ein an der Rückwand des Laugenbehälters angebrachtes Tragteil und eine Antriebsvorrichtung,
- Fig. 2: die Antriebsvorrichtung und das Tragteil gemäß Figur 1 im Querschnitt entlang einer Linie AA,
- Fig. 3: eine zweite Ausführungsform der Antriebsvorrichtung für einen geneigt angeordneten Laugenbehälter im Querschnitt, wobei die Läuferglocke der Antriebsvorrichtung an dem Tragteil auf der der Rückwand des Laugenbehälters zugewandten Seite befestigt ist.

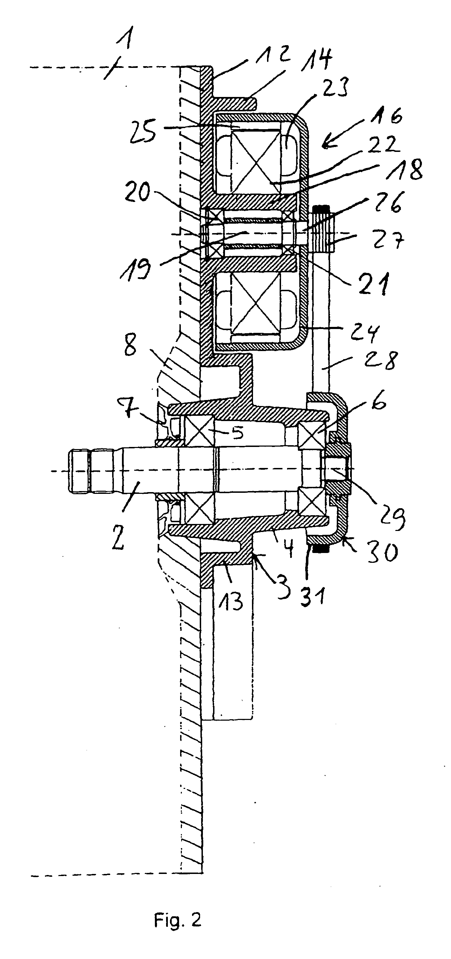

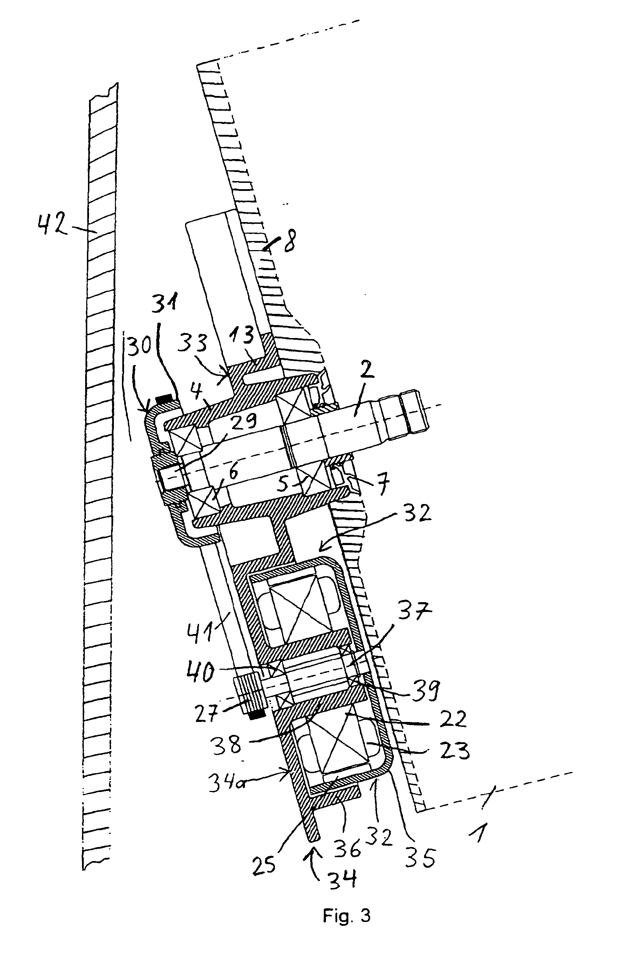

Ein Laugenbehälter 1 (Figur 2 und 3) einer Waschmaschine weist eine sich in ihm drehende Wäschetrommel (nicht dargestellt) auf, die über eine horizontal (Fig.2) oder geneigt (Fig. 3) liegende Welle 2 fliegend in dem Laugenbehälter 1 gelagert ist. Es lassen sich Neigungen von beispielsweise von 10° oder 15° gegenüber der Horizontalen realisieren; es versteht sich, daß gemäß der Erfindung auch größere Neigungen gewählt werden können. Die Welle 2 der Wäschetrommel ist in einem Tragteil 3 gelagert. Dieses weist eine Lagerbuchse 4 auf, die Lager 5 und 6, beispielsweise Kugellager, aufnimmt, in denen die Welle 2 gelagert ist.

Zur Vermeidung des Austretens der Waschlauge aus dem Laugenbehälter 1 ist eine Ringdichtung 7 vorgesehen, die die Welle 2 im Bereich der Rückwand 8 des Laugenbehälters 1 umgibt.

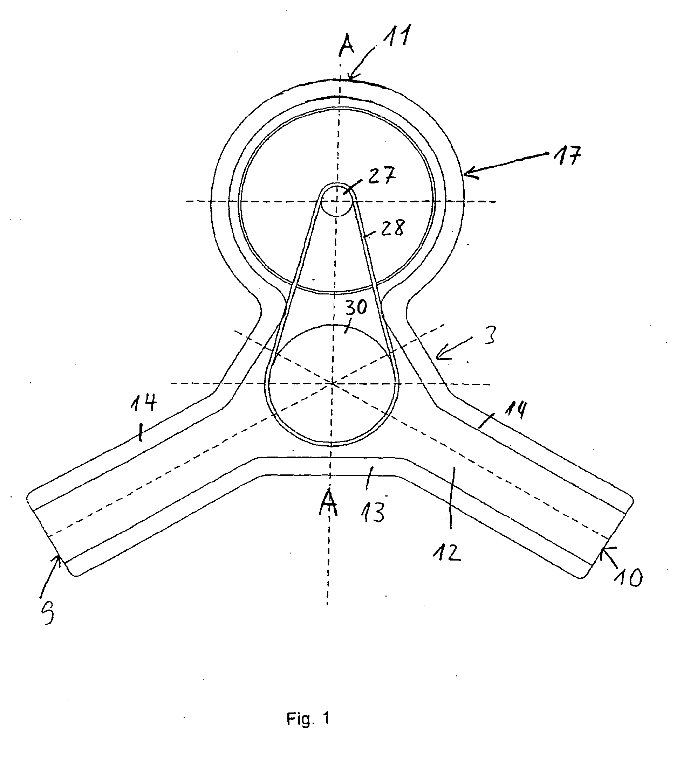

Das Tragteil 3 ist mit der Rückwand 8 fest verbunden, beispielsweise über Schraubverbindungen. Das Tragteil 3 weist sternförmig von der Mitte der Rückwand 8 ausgehende Arme 9, 10 und 11 (Figur 1) auf. Zur Verstärkung haben die Arme 9 bis 11 jeweils ein U-förmiges Profil und weisen neben einer auf der Rückwand 8 aufliegenden Wand 12 senkrecht von der Rückwand 8 abweisende Seitenwände 13 und 14 auf.

Der Arm 11 weist zur Aufnahme eines Motors 16 eine topfförmige Verbreiterung 17 auf. In der Mitte der Verbreiterung 17 weist das Tragteil 3 einen von der Rückwand 8 wegweisenden Flansch 18 zur Aufnahme der Motorwelle 19 auf, die über Lager 20 und 21 in dem Flansch 18 gelagert ist.

An dem Flansch 18 sind Statorpakete 22 befestigt, die Erregerwicklungen 23 tragen. Den Statorpaketen 22 stehen an der Innenwand eines glockenförmigen, den Läufer des Motors 16 bildenden Flansches 24 befestigte magnetische Pole 25 in radialer Richtung gegenüber. Anstelle der radialen Anordnung der Statorpakete 22 und der Pole 25 können die Statorpakete auch auf der entlang der Rückwand 8 verlaufenden Wand des Tragteils 3 angeordnet sein und die magnetischen Pole 25 auf dem im wesentlichen zu dieser Wand koplanaren Boden des Flansches 24 befestigt sein. Der Flansch 24 ist auf einem die Verlängerung der Motorwelle 19 bildenden Wellenzapfen 26 befestigt. Der Wellenzapfen 26 dient ebenfalls zur Aufnahme einer Scheibe 27 für einen Keilrippenriemen 28. Dieser überträgt die Drehbewegung des Motors 16 auf einen an einem Wellenzapfen 29 an der Welle 2 befestigten glockenförmigen Flansch 30, über dessen zylindrische Außenwand 31 der Keilrippenriemen 28 umläuft. Es versteht sich, daß anstelle der Außenwand 31 auch eine Keilriemenscheibe vorgesehen sein kann.

Dadurch, daß die Seitenwand 14 den Flansch 24 wenigstens teilweise nach oben und seitlich überdeckt, wird ein Eindringen von Schmutzpartikeln in den Bereich zwischen den Statorpaketen 22 und den Polen 25 wirksam verhindert.

Das durch die Wand 12 und die Seitenwände 13 bis 15 gebildete U-förmige Profil verleiht den Armen 9 bis 11 hohe Stabilität.

Anstelle der in Figur 1 und 2 dargestellten Ausführungsform ist bei der in Figur 3 dargestellten Antriebsvorrichtung ein Motor 32 auf der der Rückwand 8 des Laugenbehälters 1 zugewandten Seite eines Tragteils 33 angeordnet. Das Tragteil 33 ist ebenfalls sternförmig ausgeführt wie das Tragteil 3, weist jedoch im Bereich seines eine topfförmige Verbreiterung 34a aufweisenden Tragarms 34 einen anderen Aufbau auf als das Tragteil 3. Der Tragarm 34 besteht aus einer Platte und einer senkrecht auf dieser stehenden, im wesentlichen kreisförmig um den glockenförmigen Flansch 35 des Motors 32 angeordneten und in Richtung zu der Rückwand 8 weisenden Wand 36. Der Motor 32 ist im übrigen in derselben Weise aufgebaut wie der Motor 16, wie durch die Verwendung derselben Bezugszeichen angezeigt wird. Auch in diesem Fall können die Statorpakete und die Pole in axialer Richtung angeordnet sein. Der Motor 32 treibt über eine Motorwelle 37, die in einem ihre Lagerhülse bildenden Flansch 38 des Tragarms 34 über Lager 39 und 40 gelagert ist, einen Keilrippenriemen 41 in derselben Weise an wie der Motor 16 den Keilrippenriemen 28.

Durch die außermittige Anordnung des Motors 16 oder 32 wird eine Antriebsvorrichtung mit einem indirekten Antrieb für die Welle 2 geschaffen, so daß dieser im Vergleich zu einem direkt die Welle 2 antreibenden Motor, wie er aus der DE 195 47 745 A1 bekannt ist, nur ein niedrigeres Drehmoment aufzubringen braucht. Durch das Getriebe wird die Drehgeschwindigkeit der Motorwelle 19 bzw. 37 im Verhältnis von beispielsweise 3 : 1 oder 4 : 1 untersetzt. Auf diese Weise kann ein Motor mit geringerem Materialaufwand gebaut werden, als dies bei einem Direktantrieb der Fall ist.

Anstelle der in Figur 2 und 3 dargestellten Außenläufermotoren lassen sich auch Innenläufermotoren verwenden, wobei diese bei gleicher Baugröße, d. h. der Anordnung des Luftspalts an derselben Stelle einen kleineren Läufer haben und somit auch ein niedrigeres Drehmoment aufzubringen vermögen als der Außenläufermotor. Dadurch, daß der Motor 16 bzw. 32 aufgrund seines kompakten Aufbaus im Bereich hinter der Rückwand 8 des Laugenbehälters 1 angeordnet ist, steht der Bauraum unterhalb des Laugenbehälters 1 für andere Einrichtungen der Waschmaschine zur Verfügung.

Als Motor 16, 32 läßt sich sowohl ein Asynchronmotor, ein Gleichstrommotor oder auch ein Reluktanzmotor vorsehen. Der Asynchronmotor wird über einen Frequenzumrichter gesteuert, der Gleichstrommotor ist ein bürstenloser, über einen Stromrichter gesteuerter, elektronisch kommutierter Motor. Durch den Umrichterantrieb lassen sich die Motoren 16, 32 positionsgenau ansteuern und positionsgenau abbremsen. Die Ortsauflösung der Abbremsposition des Motors 16, 32 von ± 3° ergibt bei einem Untersetzungsverhältnis von 3 : 1 eine Trommelpositionsauflösung von ± 1°. Somit wird durch das Untersetzungsgetriebe die Ortspositionsauflösung noch erhöht. Eine genaue Ortsauflösung läßt sich insbesondere bei Verwendung eines Zahnradgetriebes, insbesondere auch mit schräg verzahnten Zahnrädern, erreichen wie auch bei Einsatz eines Zahnriemens anstelle eines einfachen Keilriemens oder des Keilrippenriemens.

Gegenüber einem konventionellen indirekten Antrieb hat der Keilrippenriemen 28, 41 oder ein entsprechender Keilriemen oder Zahnriemen auf der Außenwand 31 des Flansches 30 einen größeren Umschlingungswinkel und kann somit schmaler ausgeführt werden als bei einem konventionellen Antrieb.

Der Motor 16 ist wie in Figur 2 dargestellt, auf einem gesonderten Tragteil 3 angeordnet.

Ein besonders vorteilhafter Aufbau der Waschmaschine ergibt sich dann, wenn diese, wie in Fig. 3 dargestellt. eine mit der Befüllöffnung nach oben gegenüber der Horizontalen geneigte Wäschetrommel und eine ebenso geneigte Welle 2 aufweist, so daß die Rückwand 8 gegenüber der Vertikalen ebenfalls entsprechend geneigt ist und der Motor 16, 32 unterhalb der Welle 2 im Bereich zwischen der Rückwand 8 und der Rückwand 42 der Waschmaschine angeordnet ist. Dadurch ergibt sich eine außerordentlich platzsparende Unterbringung des Motors 16, 32.

Eine Antriebsvorrichtung für eine von vom beschickbare Waschmaschine mit einer innerhalb einer mit der Rückwand 8 des Laugenbehälters 1 in fester Verbindung stehenden Lagerhülse 4 über eine im wesentlichen horizontal liegende Welle 2 fliegend gelagerten Wäschetrommel wird durch einen ebenfalls hinter der Rückseite 8 des Laugenbehälters 1 angeordneten Motor 16, 32 angetrieben. Dabei ist der Motor 16, 32 außerhalb der durch die Welle 2 gebildeten Mitte der Rückwand 8 aber hinter dieser angeordnet. Er überträgt sein Drehmoment über ein Getriebe, das beispielsweise durch eine Scheibe 27 und einen Keilrippenriemen 28, 41 gebildet ist, auf die Welle 2.

## Patentansprüche

1. Von vom beschickbare Waschmaschine mit einem Laugenbehälter (1) und mit einer Wäschetrommel, die durch einen hinter der Rückwand (8) des Laugenbehälters (1) angeordneten Motor (16, 32) angetrieben wird und die innerhalb einer mit der Rückwand (8) des Laugenbehälters (1) in fester Verbindung stehenden Lagerhülse (4) über eine Welle (2) fliegend gelagert ist, wobei der Motor (16, 32) hinter der Rückwand (8) außerhalb der durch die Welle (2) gebildeten Mitte der Rückwand (8) angeordnet ist, und wobei das von dem Motor (16, 32) erzeugte Drehmoment über ein Getriebe auf die Welle (2) übertragen wird, **dadurch gekennzeichnet, dass** der Motor (16, 32) an einem an der Rückwand (8) befestigten und hinter dieser angeordneten Tragteil (3, 33) befestigt ist, wobei das Tragteil (3, 33) durch von der Mitte der Rückwand (8) nach außen sich erstreckende Arme (9, 10, 11) ausgebildet und der Motor (16, 32) auf einem dieser Arme (9, 10, 11) angeordnet ist, der eine im wesentlichen topfförmigen Verbreiterung (17) aufweist, die den Motor (16, 32) aufnimmt.

2. Waschmaschine nach Anspruch 1, **dadurch gekennzeichnet, dass** der Motor (16) auf der von der Rückwand (8) abgewandten Seite des Tragteils (3) angeordnet ist.

3. Waschmaschine nach Anspruch 1, **dadurch gekennzeichnet, dass** der Motor (32) an dem Tragteil (3) im Bereich zwischen dem Tragteil (33) und der Rückwand (8) des Laugenbehälters (1) angeordnet ist.

4. Waschmaschine nach einem der Ansprüche 1 bis 3, **dadurch gekennzeichnet, dass** durch den Motor (16, 32) eine Motorwelle (19, 37) und über diese sowie eine auf ihr aufgebrachte Scheibe (27) ein Keilriemen, ein Zahnriemen oder Keilrippenriemen (28, 41) angetrieben wird, wobei der Keilriemen, der Zahnriemen oder der Keilrippenriemen (28,41) seinerseits um eine auf der Welle (2) angeordnete Scheibe oder einen auf ihr angeordneten glockenförmigen Flansch (31) umläuft und diese antreibt.

5. Waschmaschine nach einem der Ansprüche 1 bis 3, **dadurch gekennzeichnet, dass** die Welle (2) der Wäschetrommel über ein Zahnräder, insbesondere schräg verzahnte Zahnräder, aufweisendes Getriebe angetrieben wird.

6. Waschmaschine nach einem der Ansprüche 1 bis 5, **dadurch gekennzeichnet, dass** der Motor (16, 32) als Außenläufermotor ausgebildet ist.

7. Waschmaschine nach einem der Ansprüche 1 bis 6, **dadurch gekennzeichnet, dass** das Tragteil (3, 33) einen die Lagerhülse der Motorwelle (19, 37) bildenden Flansch (18, 38) aufweist, der die Statorpakete (22) trägt.

8. Waschmaschine nach einem der Ansprüche 1 bis 7, **dadurch gekennzeichnet, dass** sich die Statorpakete (22) und die magnetischen Pole (25) des Läufers, bezogen auf die Motorwelle (19, 37) in axialer oder in radialer Richtung, gegenüberstehen.

9. Waschmaschine nach einem der Ansprüche 1 bis 8, **dadurch gekennzeichnet, dass** das Tragteil (3) eine den Läufer des Motors (16, 32) im wesentlichen ringförmig überdeckende Seitenwand (14, 36) aufweist.

10. Waschmaschine nach einem der Ansprüche 1 bis 9, **dadurch gekennzeichnet, dass** der Läufer des Motors (16, 32) als glockenförmiger Flansch (24, 35) ausgebildet ist.

11. Waschmaschine nach einem der Ansprüche 1 bis 10, **dadurch gekennzeichnet, dass** bei mit der Befüllöffnung nach oben geneigter Wäschetrommel der Motor (16, 32) unterhalb der Welle (2) im Bereich zwischen der Rückwand (8) und der Rückwand (42) der Waschmaschine angeordnet ist.

12. Waschmaschine nach einem der Ansprüche 1 bis 11, **dadurch gekennzeichnet, dass** der Motor (16, 32) ein elektronisch kommutierter Gleichstrommotor, ein über einen Frequenz-Umrichter gesteuerter Asynchronmotor oder ein Reluktanzmotor ist.

## Claims

1. Front-loading washing machine with a solution container (1) and with a laundry drum, which is driven by a motor (16, 32) arranged behind the rear wall (8) of the solution container (1) and which is cantilever mounted by way of a shaft (2) within a bearing sleeve (4) disposed in fixed connection with the rear wall (8) of the solution container (1), wherein the motor (16, 32) is arranged behind the rear wall (8) outside the centre, which is formed by the shaft (2), of the rear wall (8) and wherein the torque produced by the motor (16, 32) is transmitted to the shaft (2) by way of a transmission, **characterised in that** the motor (16, 32) is fastened to a support member (3, 33) fastened to the rear wall (8) and arranged behind this, wherein the support member (3, 33) is formed by arms (9, 10, 11) extending outwardly from the centre of the rear wall (8) and the motor (11) is arranged on one of these arms (9, 10, 11), which has a substantially pot-shaped enlargement (17) which receives the motor (16, 32).

2. Washing machine according to claim 1, **characterised in that** the motor (16) is arranged on the side of the support member (3) remote from the rear wall (8).

3. Washing machine according to claim 2, **characterised in that** the motor (32) is arranged at the support member (3) in the region between the support member (33) and the rear wall (8) of the solution container (1).

4. Washing machine according to one of claims 1 to 3, **characterised in that** a motor shaft (19, 37) is driven by way of the motor (16, 32) and, by way of the motor shaft and a pulley (27) mounted thereon, a V-belt, a cogged belt or wedge-ribbed belt (28, 41), wherein the V-belt, the cogged belt or the wedge-ribbed belt (28, 41) in turn circulate around the pulley arranged on the shaft (2) or a bell-shaped flange (31) arranged on the pulley and drive this.

5. Washing machine according to one of claims 1 to 3, **characterised in that** the shaft (2) of the laundry drum is driven by way of a transmission having gearwheels, particularly skew-toothed gearwheels.

6. Washing machine according to one of claims 1 to 5, **characterised in that** the motor (16, 32) is constructed as an external rotor motor.

7. Washing machine according to one of claims 1 to 6, **characterised in that** the support member (3, 33) comprises a flange (18, 38) which forms the bearing sleeve of the motor shaft (19, 37) and carries a stator lamination stack (22).

8. Washing machine according to one of claims 1 to 7, **characterised in that** the stator lamination stack (22) and the magnetic poles (25) of the rotor are disposed opposite one another in axial or radial direction with respect of the motor shaft (19, 37).

9. Washing machine according to one of claims 1 to 8, **characterised in that** the support member (3) comprises side wall (14, 36) covering the rotor of the motor (16, 32) in substantially annular manner.

10. Washing machine according to one of claims 1 to 9, **characterised in that** the rotor of the motor (16, 32) is constructed as a bell-shaped flange (24, 35).

11. Washing machine according to one of claims 1 to 10, **characterised in that** in the case of a laundry drum with the filling opening inclined upwardly the motor (16, 32) is arranged directly below the shaft (2) in the region between the rear wall (8) and the rear wall (42) of the washing machine.

12. Washing machine according to one of claims 1 to 11, **characterised in that** the motor (16, 32) is an electronically commutated direct current motor, an asynchronous motor controlled by way of a frequency converter or a reluctance motor.

## Revendications

1. Machine à laver à chargement frontal comprenant une cuve à lessive (1) et un tambour à linge qui est entraîné par un moteur (16, 32) situé derrière la paroi postérieure (8) de la cuve à lessive (1) et qui est monté en porte-à-faux par le biais d'un arbre (2) à l'intérieur d'un palier de support (4) en liaison fixe avec la paroi postérieure (8) de la cuve à lessive (1), le moteur (16, 32) étant situé derrière la paroi postérieure (8) à l'extérieur du centre de la paroi postérieure (8) formé par l'arbre (2) et le couple de rotation produit par le moteur (16, 32) étant transmis à l'arbre (2) par le biais d'une transmission, **caractérisée en ce que** le moteur (16, 32) est fixé sur un élément porteur (3, 33) fixé sur la paroi postérieure (8) et situé derrière celle-ci, l'élément porteur (3, 33) étant formé par des bras (9, 10, 11) qui s'étendent du centre de la paroi postérieure (8) vers l'extérieur et le moteur (16, 32) étant situé sur un de ces bras (9, 10, 11) qui présente un élargissement (17) essentiellement en forme de pot qui reçoit le moteur (16, 32).

2. Machine à laver selon la revendication 1, **caractérisée en ce que** le moteur (16) est situé sur le côté de l'élément porteur (3) détourné de la paroi postérieure (8).

3. Machine à laver selon la revendication 1, **caractérisée en ce que** le moteur (32) est situé sur l'élément porteur (3) dans la zone entre l'élément porteur (33) et la paroi postérieure (8) de la cuve à lessive (1).

4. Machine à laver selon l'une des revendications 1 à 3, **caractérisée en ce qu'**un arbre de moteur (19, 37) est entraîné par le moteur (16, 32) et une courroie trapézoïdale, une courroie crantée ou une courroie trapézoïdale à nervures (28, 41) est entraînée par le biais de l'arbre ainsi que d'un disque (27) installé sur lui, la courroie trapézoïdale, la courroie crantée ou la courroie trapézoïdale à nervures (28, 41) entourant quant à elle un disque situé sur l'arbre (2) ou une bride (31) en forme de cloche située sur celui-ci et l'entraînant.

5. Machine à laver selon l'une des revendications 1 à 3, **caractérisée en ce que** l'arbre (2) du tambour à linge est entraîné par le biais d'une transmission présentant des roues dentées, notamment des roues dentées à denture inclinée.

6. Machine à laver selon l'une des revendications 1 à 5, **caractérisée en ce que** le moteur (16, 32) est exécuté en tant que moteur à induit extérieur.

7. Machine à laver selon l'une des revendications 1 à 6, **caractérisée en ce que** l'élément porteur (3, 33) est pourvu d'une bride (18, 38) formant le palier de support de l'arbre de moteur (19, 37) qui porte les paquets de stator (22).

8. Machine à laver selon l'une des revendications 1 à 7, **caractérisée en ce que** les paquets de stator (22) et les pôles magnétiques (25) de l'induit sont opposés les uns aux autres par rapport à l'arbre de moteur (19, 37) dans la direction axiale ou dans la direction radiale.

9. Machine à laver selon l'une des revendications 1 à 8, **caractérisée en ce que** l'élément porteur (3) est pourvu d'une paroi latérale (14, 36) couvrant de manière essentiellement annulaire l'induit du moteur (16, 32).

10. Machine à laver selon l'une des revendications 1 à 9, **caractérisée en ce que** l'induit du moteur (16, 32) est exécuté en tant que bride en forme de cloche (24, 35).

11. Machine à laver selon l'une des revendications 1 à 10, **caractérisée en ce que**, avec un tambour à linge dont l'ouverture de remplissage est inclinée vers le haut, le moteur (16, 32) est situé au-dessous de l'arbre (2) dans la zone entre la paroi postérieure (8) et la paroi postérieure (42) de la machine à laver.

12. Machine à laver selon l'une des revendications 1 à 11, **caractérisée en ce que** le moteur (16, 32) est un moteur à courant continu à commutation électronique, un moteur asynchrone commandé par le biais d'un convertisseur de fréquence ou un moteur à réluctance.
